# FASCICULE DE BREVET EUROPEEN

(11) **EP 1 588 252 B1**
(45) Date de publication et mention de la délivrance du brevet: **20.03.2013**
(21) Numéro de dépôt: 04700717.4
(22) Date de dépôt: 08.01.2004
(51) Int. Cl.: G07F 7/00, G07F 17/16, G07F 7/10, H04L 12/14, G06Q 20/00

(54) **PROCEDE ET SYSTEME DE TRANSFERT DE DONNEES ENTRE DES BORNES PUBLIQUES INTERACTIVES ET DES TERMINAUX PERSONNELS**
SYSTEM UND VERFAHREN ZUR ÜBERTRAGUNG VON DATEN ZWISCHEN INTERAKTIVEN ÖFFENTLICHEN TERMINALGERÄTEN UND PERSÖNLICHEN TERMINALGERÄTEN
METHOD AND SYSTEM FOR DATA TRANSFER BETWEEN INTERACTIVE PUBLIC TERMINALS AND PERSONAL TERMINALS

(30) Priorité: 08.01.2003 FR 0300201
(43) Date de publication de la demande: 26.10.2005
(73) Titulaire: Vanexport Sarl, 34170 Castelnau le Lez (FR)
(72) Inventeur: CORTES, Ramon, F-34070 Montpellier (FR); VANDROMME, Pascal, 34071 Montpellier Cedex 3 (FR); FOURNIL, Nicolas, 13400 Aubagne (FR); RAISON, Sébastien, F-34000 Montpellier (FR)
(74) Mandataire: Rhein, Alain
(86) Numéro de dépôt international: PCT/FR2004/050006
(87) Numéro de publication internationale: WO 2004/066056

(56) Documents cités:
- WO-A-03/042939
- WO-A2-01/57617
- US-A- 5 926 624
- US-B1- 6 366 791
- US-B1- 6 369 908
- "Ringtone.Net, INDEX PAGE"[Online] 3 août 2001 (2001-08-03), XP002255325 Extrait de l'Internet: URL:www.ringtone.net> [extrait le 2001-08-03]

## Description

L'invention concerne un procédé et un système de transfert de données, de type sons et/ou images et/ou alphanumériques et/ou programmes, choisies notamment parmi des logos, des sonneries, des jeux, des messages de répondeur ou autres, entre au moins une borne électronique, de type borne publique interactive, et au moins un terminal, de type appareils électroniques à usage personnel, notamment un téléphone mobile, en vue de le personnaliser.

A ce jour, pour personnaliser un téléphone mobile avec des données de ce type, il n'existe que deux solutions :
- la première consistant à entrer en communication avec un centre serveur téléphonique de type « audiotel » et à saisir le code de la donnée souhaitée (par exemple une sonnerie ou un logo) et les références du terminal que l'on désire personnaliser : cette solution est onéreuse d'une part, à cause de la tarification élevée de ce type de liaison et, d'autre part, à cause des temps d'attentes relativement longs pour l'obtention du service demandé, avec en plus un manque de fiabilité et une limitation quant au volume du catalogue produits ;
- la deuxième consistant à entrer en communication avec un site Internet et à saisir également le code de la donnée souhaitée et les références du terminal que l'on désire personnaliser ; cette solution, payable en général par carte bancaire, nécessite du matériel et une connexion spécifiques qui n'est malheureusement pas généralisée avec en plus la réticence du consommateur au paiement électronique, même sécurisé.

L'on connaît, également et par le document WO-A-01/57617, un procédé de transfert de données, de type sons et/ou images et/ou alphanumériques et/ou programmes, entre au moins une borne électronique et au moins un terminal. Ce procédé consiste :
a) à saisir, au niveau de la borne électronique publique interactive utilisée, les références du terminal à personnaliser ;
b) à sélectionner, au niveau de ladite borne, des données spécifiques, de type sons et/ou images et/ou alphanumériques et/ou programmes, notamment des logos, des sonneries, des jeux ou des messages de répondeur ;
c) à régler le montant du service sélectionné, au moyen d'un périphérique de paiement installé sur ladite borne;
d) à transmettre au terminal, via un réseau de communication, les données sélectionnées dans le but de personnaliser ce terminal.

Le document WO-A-01/57617 divulgue, également, un système de transfert de données, de type sons et/ou images et/ou alphanumériques et/ou programmes, entre au moins une borne électronique publique interactive et au moins un terminal à personnaliser. Ce système comporte :
a) au moins une borne, chaque borne comportant:
   - une unité centrale comprenant des moyens de stockage destinés à contenir, lorsque la borne est en service, un logiciel d'exploitation ainsi que des données relatives à des services offerts ;
   - des moyens d'interaction avec un utilisateur, de type périphériques de sélection et de reproduction des données;
   - des moyens d'interaction avec un exploitant, de type interface de communication avec un centre d'exploitation, via un réseau de communication;
   - un périphérique de stockage de masse, contenant le logiciel d'exploitation et les données qui sont transférées, à chaque activation et/ou à chaque mise sous tension de la borne, aux moyens de stockage de l'unité centrale ;
b) des moyens de transmission desdites données sélectionnées à au moins un terminal sélectionné, ceci via un réseau de télécommunication;
c) au moins un terminal, chaque terminal comportant des moyens de reproduction des données reçues.

L'invention vise donc à mettre en oeuvre un procédé et un système de transfert de données à usage grand public qui élimine les inconvénients susmentionnés.

L'invention concerne, alors, un procédé de transfert de données, de type sons et/ou images et/ou alphanumériques et/ou

programmes, entre au moins une borne électronique publique interactive et au moins un téléphone mobile, ce procédé consistant :
a) à saisir, au niveau de la borne électronique publique interactive utilisée, les références du téléphone mobile à personnaliser, notamment l'adresse téléphonique et, en addition, la marque et le modèle ;
b) à sélectionner, au niveau de ladite borne, des données spécifiques, de type sons et/ou images et/ou alphanumériques et/ou programmes, notamment des logos, des sonneries, des jeux ou des messages de répondeur, ceci dans le but de personnaliser le téléphone mobile ;
c) à régler le montant du service sélectionné, au moyen d'un périphérique de paiement installé sur ladite borne;
d) à transmettre au téléphone mobile, via un réseau de communication, les données sélectionnées dans le but de personnaliser ce téléphone mobile.

Ce procédé est caractérisé par le fait qu'il consiste :
e) en ce que les données spécifiques, que contient la borne, sont constituées uniquement par une représentation visuelle et/ou sonore des données spécifiques susceptibles d'être sélectionnées ;
f) à transmettre, tout d'abord, de ladite borne à un centre d'exploitation, uniquement une désignation des données sélectionnées dans le but de personnaliser le téléphone mobile;
g) à transmettre, par ce centre d'exploitation, via un réseau de communication et directement audit téléphone mobile, les données sélectionnées, ceci sur la base de la désignation des données sélectionnées reçue par ce centre d'exploitation.

Cette invention concerne, également, un programme d'ordinateur (logiciel d'exploitation) comportant des portions de code de programme pour l'exécution des étapes de ce procédé de transfert de données.

L'invention concerne, encore, un système de transfert de données, de type sons et/ou images et/ou alphanumériques et/ou programmes, entre au moins une borne électronique publique interactive et au moins un téléphone mobile à personnaliser, destiné à mettre en oeuvre le procédé mentionné ci-dessus.

Ce système comporte :
a) au moins une borne électronique publique interactive, chaque borne comportant:
   - une unité centrale comprenant des moyens de stockage destinés à contenir, lorsque la borne est en service, un logiciel d'exploitation ainsi que des données relatives à des services offerts ;
   - des moyens d'interaction avec un utilisateur, de type périphériques de sélection et de reproduction des données;
   - des moyens d'interaction avec un exploitant, de type interface de communication avec un centre d'exploitation, via un réseau de communication;
   - un périphérique de stockage de masse, contenant le logiciel d'exploitation et les données qui sont transférés, à chaque activation et/ou à chaque mise sous tension de la borne, aux moyens de stockage de l'unité centrale ;
b) des moyens de transmission desdites données sélectionnées à au moins un téléphone mobile sélectionné, ceci via un réseau de télécommunication;
c) au moins un téléphone mobile, chaque téléphone mobile comportant des moyens de reproduction des données reçues.

Ce système est caractérisé par le fait que :
d) les données, que contiennent le périphérique de stockage de masse ou les moyens de stockage, sont constituées uniquement par une représentation visuelle et/ou sonore des données spécifiques susceptibles d'être sélectionnées ;
e) la borne électronique publique interactive comporte des moyens de transmission au centre d'exploitation, via un réseau de communication, d'une désignation des données sélectionnées ;
f) le centre d'exploitation comporte des moyens pour transmettre, via un réseau de communication et directement audit téléphone mobile, les données sélectionnées sur la base de la désignation des données sélectionnées reçue.

Le système en question présente, pour l'utilisateur, les avantages additionnels suivants :
- personnalisation du mobile en quelques secondes grâce à son interface ergonomique (écran tactile par exemple) ;
- paiement directement sur la borne par pièces, carte bancaire, carte à gratter ou par tout autre moyen de paiement ;
- grande capacité de produits en catalogue et facilité de renouvellement de son contenu ;
- coût maîtrisé puisque bien déterminé.

Il présente également, pour l'exploitant, les avantages suivants :
- grande fiabilité: la borne ne possède pas de pièce mécanique en mouvement en cours de fonctionnement ;
- grandes capacités d'évolution : au niveau des logiciels et des modules constitutifs de la borne;
- absence de redevances à payer sur la technologie : par l'utilisation de logiciels libres ;
- sécurité : les parties sensibles de la technologie sont protégées.

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins:
- la figure 1 est une vue schématique de l'installation selon l'invention ;
- la figure 2 est une vue schématique des échanges d'informations entre les principaux sous ensembles de la borne selon l'invention.
L'invention concerne un procédé de transfert de données (D), de type sons et/ou images et/ou alphanumériques et/ou programmes, entre au moins une borne électronique (B1,Bn) et au moins un terminal (T1,Tn). Selon cette invention, ce procédé de transfert consiste :
a) à saisir, au niveau de la borne électronique (B1) utilisée, qui est du type borne publique interactive, les références (notamment l'adresse téléphonique et, en addition, la marque et le modèle, voire l'opérateur) du terminal **(T1),** à personnaliser, qui est du type appareil électronique à usage personnel, notamment un téléphone mobile;
b) à sélectionner, au niveau de ladite borne (B1), des données spécifiques **(D),** de type sons (par exemple des sonneries, des extraits musicaux, des messages de répondeur...) et/ou images (par exemple, des logos, des images, des fonds et économiseurs d'écrans...) et/ou alphanumériques et/ou programmes (par exemple des jeux ou autres) ;
c) à régler le montant du service sélectionné, au moyen d'un périphérique de paiement installé sur ladite borne (B1) ;
d) à transmettre audit terminal (T1), via un réseau de communication (R1), les données (D) sélectionnées dans le but de personnaliser ledit terminal.

Selon une autre caractéristique du procédé selon l'invention, préalablement à une saisie des références d'un terminal (T1, Tn), il est procédé à un chargement, au niveau d'une mémoire volatile (MV) et à partir d'un périphérique de stockage de masse que comporte ladite borne électronique (B1, Bn), d'un logiciel d'exploitation du procédé ainsi que de données (D) relatives à des services offerts et sélectionnables, notamment une représentation visuelle et/ou sonore de données spécifiques susceptibles d'être sélectionnées.

A ce propos, on observera qu'un tel chargement peut être assuré préalablement à une première saisie des références d'un ou plusieurs terminaux (T1) au niveau d'une même borne ou à chacune de ces saisies.

Cependant et selon un mode de réalisation préféré, un tel chargement est assuré à chaque activation et/ou à chaque mise sous tension de la borne électronique (B1, Bn).

Une autre caractéristique de l'invention consiste en ce que, après la saisie des références d'un terminal (T1) et avant de sélectionner les données (D) spécifiques, on procède à une analyse des possibilités du terminal (T1) en fonction des références saisies pour mettre à disposition des données spécifiques, compatibles avec les possibilités du terminal (T1), et susceptibles d'être sélectionnées.

Ce procédé consiste, encore, en ce que, avant de sélectionner les données (D) spécifiques, on procède à une reproduction visuelle et/ou sonore des données (D) spécifiques susceptibles d'être sélectionnées, ceci au niveau de moyens de reproduction (PR) visuelle et/ou sonore que comporte ladite borne électronique (B1, Bn). Ceci permet, avantageusement, à un utilisateur de choisir les données qu'il souhaite transférer à son terminal (T1) après les avoir vues, entendues et/ou testées.

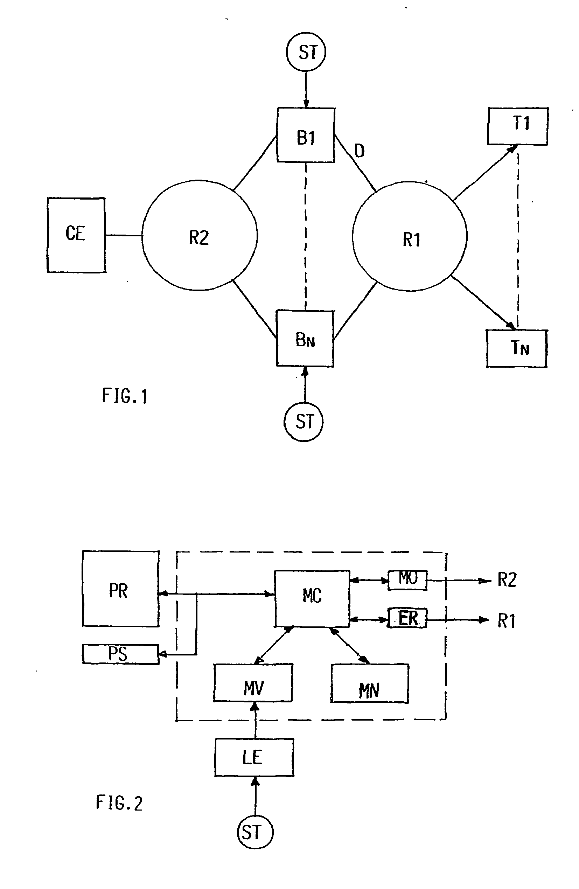

En ce qui concerne le transfert des données (D) sélectionnées audit terminal (T1, Tn), celui-ci peut être assuré directement de la borne (B1, Bn) audit terminal (T1, Tn) comme visible figures 1 et 2. Un tel mode de réalisation implique que ces données soient présentes au niveau de ladite borne (B1, Bn) et que cette dernière (B1, Bn) comporte des moyens de transmission (ER) agencés pour assurer un tel transfert, via un réseau de télécommunication (R1).

Cependant et selon un mode de réalisation préféré de l'invention, une telle borne (B1, Bn) ne contient pas de telles données mais uniquement une représentation visuelle et/ou sonore de celles-ci. Une telle représentation ne peut, en aucun cas, être utilisable directement par un terminal (T1, Tn), évitant, ainsi, toute utilisation non autorisée de ces données. En fait, les données, susceptibles d'être transférées audit terminal (T1, Tn), sont, soit présentes au niveau d'un centre d'exploitation (CE), plus particulièrement au niveau d'un serveur, soit générées à partir de données spéciales (par exemple des master) présentes au niveau d'un tel centre d'exploitation (CE), notamment d'un serveur.

Le procédé consiste, alors, en ce que, préalablement à la transmission des données (D) sélectionnées au terminal (T1), l'on transmet, tout d'abord (et via un réseau de télécommunication (R2)), de ladite borne (B1, Bn) à un tel centre d'exploitation (CE), une désignation des données sélectionnées. Ce centre d'exploitation (CE) transmet, ensuite (et via un réseau de télécommunication (R1)), les données sélectionnées audit terminal (T1) sur la base de la désignation des données sélectionnées reçue.

A ce propos, on observera que la désignation des données sélectionnées peut être complétée par des informations relatives aux références du terminal (marque, modèle, numéro d'appel...), à l'opérateur, à l'utilisateur (notamment des informations liées à un moyen de paiement), voire encore à des moyens d'identification de la borne (B1, Bn) auprès de laquelle l'utilisateur saisit ces informations ou autre. La transmission de ces informations en direction du centre d'exploitation (CE) peut être assurée de manière codée et/ou cryptée. Ces informations peuvent être exploitées, notamment au niveau du centre d'exploitation (CE), afin d'assurer un suivi de qualité de service, d'assurer une traçabilité, de procéder à une facturation (ou à une refacturation par exemple à un opérateur), de procéder à des études statistiques, à établir une commande (notamment de type électronique pour les données sélectionnées) ou autre.

Selon une autre caractéristique, l'invention concerne, encore, un programme d'ordinateur comportant des portions de code de programme pour l'exécution des étapes de ce procédé de transfert de données. Ce programme d'ordinateur est, au moins en partie, constitué par le logiciel d'application susmentionné et conçu apte à gérer, de manière automatique, ce procédé ainsi que les interfaces, périphériques et autres moyens techniques mis en oeuvre par ce procédé.

L'invention concerne, encore, un système de transfert de données (D), de type sons et/ou images et/ou alphanumériques et/ou programmes, entre au moins une borne publique interactive (B1,Bn) et au moins un terminal personnel (T1,Tn), à personnaliser. Ce système peut, plus particulièrement, être adapté pour la mise en oeuvre du procédé susmentionné.

Ce système est caractérisé en ce qu'il comporte :
a) au moins une borne (B1,Bn), chaque borne (B1,Bn) comportant:
   - une unité centrale comprenant des moyens de stockage destinés à contenir, lorsque la borne est en service, un logiciel d'exploitation ainsi que des données (D) relatives à des services offerts ;
   - des moyens d'interaction avec un utilisateur, de type périphériques de sélection (PS) et de reproduction (PR) des données (D);
   - des moyens d'interaction avec un exploitant, de type interface de communication (MO), par exemple de type modem, pour une communication avec un centre d'exploitation (CE) notamment de type serveur, via un réseau de communication (R2) ;
   - un périphérique de stockage de masse, contenant le logiciel d'exploitation et les données (D) qui sont transférés, à chaque activation et/ou à chaque mise sous tension de la borne, aux moyens de stockage de l'unité centrale ;
b) des moyens de transmission desdites données (D) sélectionnées à au moins un terminal personnel (T1) sélectionné, ceci via un réseau de télécommunication (R1) ;
c) au moins un terminal (T1,Tn), par exemple de type téléphone mobile ou ordinateur portable,, chaque terminal (T1, Tn) comportant des moyens de reproduction des données (D) reçues.

En fait, chaque borne (B1, Bn) comporte une unité centrale comprenant, une carte mère compatible PC, un processeur (MC) compatible PC, par exemple de type P3 500 MHz, des moyens de stockage.

De tels moyens de stockage de chaque borne (B1, Bn) sont définis, au moins en partie, par une mémoire volatile (MV), notamment de type RAM, par exemple de capacité 256 Mo.

Cette mémoire volatile (MV) est destinée à contenir, lorsque la borne (B1, Bn) est en service, le logiciel d'exploitation ainsi que les données (D) relatives aux services offerts. C'est à cette mémoire volatile (MV) que sont transférés ce logiciel d'exploitation et ces données (D), ceci à chaque activation et/ou à chaque mise sous tension de la borne, voire avant une saisie de référence d'un ou plusieurs terminaux (T1, Tn).

En fait et tel qu'évoqué ci-dessus, les données relatives aux services offerts peuvent être enregistrées au niveau de la borne (B1, Bn) sous une forme apte à être transférée directement à un terminal (T1, Tn) et exploitée directement par celui-ci.

Pour ce faire, la borne (B1, Bn) comporte des moyens (ER) agencés pour assurer directement une transmission des données (D) sélectionnées au terminal personnel (T1), via un réseau de télécommunication (R1) comme visible figures 1 et 2.

De tels moyens de transmission (ER) peuvent, par exemple, être constitués par émetteur/récepteur de type GSM ou autre.

Cependant et selon un mode de réalisation préféré, les données (D) relatives à des services offerts, contenues, selon le cas, au niveau du périphérique de stockage de masse ou au niveau de la mémoire volatile (MV), sont constituées par des représentations visuelles et/ou sonores des données spécifiques susceptibles d'être sélectionnées mais, aucunement, par des données directement exploitables par un terminal (de telles données étant, en fait et uniquement, contenues ou générées au niveau du centre d'exploitation CE).

Ceci étant, la borne (B1, Bn) comporte des moyens de transmission (MO) au centre d'exploitation (CE) d'une désignation des données sélectionnées, ceci via un réseau de communication (R2). Ce centre d'exploitation (CE) comporte, alors, des moyens pour transmettre (par exemple de type émetteur/récepteur GSM) les données sélectionnées audit terminal (T1), via un réseau de communication (R1), ceci sur la base de la désignation de ces données reçue.

Selon une autre caractéristique du système selon l'invention, les moyens de stockage de chaque borne (B1, Bn) sont définis, au moins en partie, par une mémoire non volatile (MN) comportant une clé de cryptage des identifiants des sous ensembles de la borne et des moyens de chargement (ST) du logiciel d'exploitation et des données, ou de téléchargement (MO) desdits informations à partir du centre d'exploitation (CE), qui est recalculée, à chaque chargement ou téléchargement, et comparée à la clé stockée afin d'autoriser, ou non, son fonctionnement.

Une telle mémoire non volatile (MN) peut, notamment, être de type EEPROM, par exemple de capacité 2 Mo.

En ce qui concerne les périphériques de sélection (PS) et de reproduction (PR) des données (D) de chaque borne (B1,Bn), ceux-ci peuvent être réalisés au moyen d'un écran tactile.

Un autre mode de réalisation consiste en ce que le périphérique de sélection (PS) des données (D) peut être un clavier et le périphérique de reproduction (PR) de celles-ci peut être un écran de visualisation et des hauts parieurs.

En ce qui concerne- ledit périphérique de stockage de masse, contenant le logiciel d'exploitation et les données (D), celui-ci peut être de type disque dur et/ou lecteur (LE) de DVD/CD associé à un DVD/CD (ST).

En fait et selon un mode de réalisation préféré, un tel périphérique de stockage de masse est, de préférence, conçue en sorte de permettre un remplacement et/ou une mise à jour rapide du logiciel et/ou des données. Ce périphérique est, de préférence, conçu, au moins en partie, de manière amovible, ceci de manière aisée. Aussi et selon un mode de réalisation préféré, ce périphérique est constitué par un lecteur DVD/CD associé à un DVD/CD interchangeable.

Chaque borne (B1,Bn) comporte un périphérique de paiement en espèces (à pièces, à billets...), à cartes (à puce, magnétique ou autre) ou par bon prépayé (numéro, code promotionnel, carte à gratter, jeton publicitaire...) ou de tout autre type.

Chaque borne (B1,Bn) peut, encore, comporter:
- des moyens adaptés pour envoyer, à intervalles réguliers, un rapport d'exploitation vers le centre d'exploitation (CE) ainsi qu'un état sur son fonctionnement et/ou un journal des événements.
- des moyens adaptés pour saisir et envoyer des télé messages
- des moyens adaptés pour saisir et envoyer des photos, notamment de type « webcam ».

Le réseau de communication (R1) peut être de type hertzien, notamment GSM, GPRS, UMTS, de type commuté ou de tout autre type.

Le réseau de communication (R2) peut être de type hertzien, notamment GSM, GPRS, UMTS, de type commuté ou de tout autre type.

Les réseaux de communication (R1) et (R2) peuvent être confondus.

La borne peut être totalement autonome en alimentation électrique (batteries électriques ou panneaux solaires) et en connexion réseau de communication dans le cas où les réseaux (R1) et (R2) sont des liaisons sans fil.

Le fonctionnement général du logiciel de chaque borne est le suivant:
- au démarrage, le logiciel de chargement (chargeur) teste la validité du matériel grâce aux données contenues dans la mémoire non volatile ;
- si le matériel est validé, le chargeur transfère le logiciel d'exploitation, ou d'application (applicatif) et les données depuis la mémoire de masse vers la mémoire volatile ; dans le cas contraire le système est déclaré corrompu et le chargeur s'interrompt ;
- le chargeur passe ensuite la main à l'applicatif qui permet alors une utilisation interactive de la borne.

Le fonctionnement général de l'applicatif est le suivant :
- il gère l'affichage, la saisie et les périphériques du système ;
- l'utilisateur effectue, d'une manière générale, des choix parmi ceux proposés à l'écran en les désignant, par exemple du doigt dans le cas de l'utilisation d'un écran tactile ;
- le paiement est fonction du service demandé ; la détection des pièces est effectuée par le monnayeur, mais le comptage est réalisé par l'applicatif ;
- une fois le paiement validé, les données et commandes composant le service sont envoyées, directement ou indirectement, au terminal sélectionné via R1 et/ou R2.

Le logiciel est modulaire dans sa configuration de base et de nouveaux modules peuvent être rajoutés.

Bien entendu, l'invention n'est pas limitée aux modes de réalisation décrits et représentés pour lesquels on pourra prévoir d'autres variantes, en particulier dans :
- le type et le nombre de sous ensembles et de périphériques associés à une borne donnée ;
- le type et le nombre de logiciels d'exploitation et de données contenues dans les mémoires de stockage;
- le type et le nombre de terminaux personnels à sélectionner;
- le type et le nombre de centres d'exploitation dans le cadre d'une configuration centralisée ou régionalisée ;
- le type et le nombre de réseaux de communication utilisés;
- et l'étendre à d'autres applications.

## Revendications

1. Procédé de transfert de données (D), de type sons et/ou images et/ou alphanumériques et/ou programmes, entre au moins une borne électronique publique interactive (B1,Bn) et au moins un téléphone mobile (T1,Tn), ce procédé consistant :
a) à saisir, au niveau de la borne électronique publique interactive (B1) utilisée, les références du téléphone mobile (T1) à personnaliser, notamment l'adresse téléphonique et, en addition, la marque et le modèle ;
b) à sélectionner, au niveau de ladite borne (B1), des données spécifiques (D), de type sons et/ou images et/ou alphanumériques et/ou programmes, notamment des logos, des sonneries, des jeux ou des messages de répondeur, ceci dans le but de personnaliser le téléphone mobile (T1) ;
c) à régler le montant du service sélectionné, au moyen d'un périphérique de paiement installé sur ladite borne (B1) ;
d) à transmettre au téléphone mobile (T1), via un réseau de communication (R1), les données (D) sélectionnées dans le but de personnaliser ce téléphone mobile (T1), **caractérisé par le fait que** le procédé consiste :
e) en ce que les données (D) spécifiques, que contient la borne (B1), sont constituées uniquement par une représentation visuelle et/ou sonore des données spécifiques susceptibles d'être sélectionnées ;
f) à transmettre, tout d'abord, de ladite borne (B1) à un centre d'exploitation (CE), uniquement une désignation des données sélectionnées dans le but de personnaliser le téléphone mobile (T1) ;
g) à transmettre, par ce centre d'exploitation (CE), via un réseau de communication (R1) et directement audit téléphone mobile (T1), les données (D) sélectionnées, ceci sur la base de la désignation des données sélectionnées reçue par ce centre d'exploitation (CE).

2. Procédé de transfert de données (D) selon la revendication 1, **caractérisé par le fait que**, préalablement à une saisie des références d'un terminal (T1), il est procédé à un chargement, au niveau d'une mémoire volatile (MV) et à partir d'un périphérique de stockage de masse que comporte ladite borne électronique (B1, Bn), d'un logiciel d'exploitation du procédé ainsi que de données (D) relatives à des services offerts et sélectionnables, ces données (D) étant constituées uniquement par une représentation visuelle et/ou sonore de données spécifiques susceptibles d'être sélectionnées.

3. Procédé de transfert de données (D) selon l'une quelconque des revendications précédents, **caractérisé par le fait que**, après la saisie des références d'un terminal (T1) et avant de sélectionner les données (D) spécifiques, on procède à une analyse des possibilités du terminal (T1) en fonction des références saisies pour mettre à disposition des données (D) spécifiques, compatibles avec les possibilités du terminal (T1), et susceptibles d'être sélectionnées.

4. Procédé de transfert de données (D) selon l'une quelconque des revendications précédentes, **caractérisé par le fait que**, avant de sélectionner les données (D) spécifiques, on procède à une reproduction visuelle et/ou sonore des données spécifiques susceptibles d'être sélectionnées, ceci au niveau de moyens de reproduction (PR) visuelle et/ou sonore que comporte ladite borne électronique (B1).

5. Programme d'ordinateur comportant des portions de code de programme et destiné à l'exécution des étapes du procédé de transfert de données (D) selon l'une quelconque des revendications précédentes.

6. Système de transfert de données (D), de type sons et/ou images et/ou alphanumériques et/ou programmes, entre au moins une borne électronique publique interactive (B1,Bn) et au moins un téléphone mobile (T1,Tn) à personnaliser, destiné à mettre en oeuvre le procédé selon l'une quelconque des revendications 1 à 4, **caractérisé en ce que** ce système comporte :
a) au moins une borne électronique publique interactive (B1,Bn), chaque borne (B1,Bn) comportant:
- une unité centrale comprenant des moyens de stockage destinés à contenir, lorsque la borne est en service, un logiciel d'exploitation ainsi que des données (D) relatives à des services offerts ;
- des moyens d'interaction avec un utilisateur, de type périphériques de sélection (PS) et de reproduction (PR) des données (D);
- des moyens d'interaction avec un exploitant, de type interface de communication (MO) avec un centre d'exploitation (CE), via un réseau de communication (R2) ;
- un périphérique de stockage de masse, contenant le logiciel d'exploitation et les données (D) qui sont transférés, à chaque activation et/ou à chaque mise sous tension de la borne, aux moyens de stockage de l'unité centrale ;
b) des moyens de transmission desdites données sélectionnées à au moins un téléphone mobile (T1) sélectionné, ceci via un réseau de télécommunication (R1) ;
c) au moins un téléphone mobile (T1,Tn), chaque téléphone mobile (T1, Tn) comportant des moyens de reproduction des données (D) reçues, **caractérisé par le fait que** :
d) les données (D), que contiennent le périphérique de stockage de masse ou les moyens de stockage, sont constituées uniquement par une représentation visuelle et/ou sonore des données spécifiques susceptibles d'être sélectionnées ;
e) la borne électronique publique interactive (B1,Bn) comporte des moyens de transmission (MO) au centre d'exploitation (CE), via un réseau de communication (R2), d'une désignation des données sélectionnées ;
f) le centre d'exploitation (CE) comporte des moyens pour transmettre, via un réseau de communication (R1) et directement audit téléphone mobile (T1), les données sélectionnées sur la base de la désignation des données sélectionnées reçue.

7. Système selon la revendication 6, **caractérisé en ce que** les moyens de stockage de chaque borne (B1, Bn) sont définis, au moins en partie, par une mémoire volatile (MV), d'une part et lorsque la borne est en service, qui est destinée à contenir le logiciel d'exploitation ainsi que, uniquement, une représentation visuelle et/ou sonore des données spécifiques susceptibles d'être sélectionnées et, d'autre part, à laquelle ce logiciel d'exploitation et la représentation visuelle et/ou sonore de ces données (D) sont transférés, ceci à chaque activation et/ou à chaque mise sous tension de la borne.

8. Système selon l'une quelconque des revendications 6 ou 7, **caractérisé en ce que** les moyens de stockage de chaque borne (B1, Bn) sont définis, au moins en partie, par une mémoire non volatile (MN) comportant une clé de cryptage des identifiants des sous ensembles de la borne et des moyens de chargement (ST) du logiciel d'exploitation et des données, ou de téléchargement (MO) desdits informations à partir du centre d'exploitation (CE), qui est recalculée, à chaque chargement ou téléchargement, et comparée à la clé stockée afin d'autoriser, ou non, son fonctionnement.

9. Système selon l'une quelconque des revendications 6 à 8, **caractérisé en ce que** chaque borne (B1, Bn) comporte des moyens adaptés pour envoyer, à intervalles réguliers, un rapport d'exploitation vers le centre d'exploitation (CE) ainsi qu'un état sur son fonctionnement et/ou un journal des événements.

10. Système selon l'une quelconque des revendications 6 à 9, **caractérisé en ce que** les périphériques de sélection (PS) et de reproduction (PR) des données (D) de chaque borne (B1, Bn) sont réalisés au moyen d'un écran tactile.

11. Système, selon l'une quelconque des revendications 6 à 9, **caractérisé en ce que** le périphérique de sélection (PS) des données (D) est un clavier et le périphérique de reproduction (PR) de celles-ci est un écran de visualisation.

12. Système, selon l'une quelconque des revendications 6 à 11, **caractérisé en ce que** chaque borne (B1,Bn) comporte un périphérique de paiement, notamment en espèces, par carte, bon prépayé ou par tout autre moyen de paiement.

13. Système, selon l'une quelconque des revendications 6 à 12, **caractérisé en ce que** chaque borne (B1,Bn) comporte des moyens adaptés pour saisir et envoyer des télé messages.

14. Système, selon l'une quelconque des revendications 6 à 13, **caractérisé en ce que** chaque borne (B1, Bn) comporte des moyens adaptés pour saisir et envoyer des photos.

15. Système, selon l'une quelconque des revendications 6 à 14, **caractérisé en ce que** le réseau de communication (R1) est de type hertzien, notamment GSM, GPRS, UMTS, ou de type commuté.

16. Système, selon l'une quelconque des revendications 6 à 14, **caractérisé en ce que** le réseau de communication (R2) est de type hertzien, notamment GSM, GPRS, UMTS, ou de type commuté.

17. Système, selon les revendications 15 et 16, **caractérisé en ce que** les réseaux de communication (R1) et (R2) sont confondus.

## Claims

1. Method for transferring data (D), of the type sounds and/or images and/or alphanumeric data and/or programs, between at least one interactive electronic public terminal (B1, Bn) and at least one mobile phone (T1, Tn), said method consisting in:
a) entering, at the level of the interactive electronic public terminal (B1) used, the references of the mobile phone (T1) to be personalized, in particular the telephone address and, in addition, the make and the modes;
b) selecting, at the level of said terminal (B1), specific data (D), of the type sounds and/or images and/or alphanumeric data and/or programs, in particular logos, ringtones, games or answering machine messages, in order to personalize the mobile phone (T1);
c) paying the amount for the selected service, by means of a payment device installed on said terminal (B1);
d) transmitting to the mobile phone (T1), via a communication network (R1), the data (D) selected for the purpose of personalizing said mobile phone (T1), wherein the method consists:
e) in that the specific data (D), which the terminal (B1) contains, consist solely of a visual and/or sound representation of specific data capable of being selected;
f) in transmitting, first of all, from said terminal (B1) to an operating center (CE), solely a designation of the data selected for the purpose of personalizing the mobile phone (T1);
g) in transmitting, by said operating center (CE), via a communication network (R1) and directly to said mobile phone (T1), the selected data (D), based on the designation of the selected data received by said operating center (CE).

2. Method for transferring data (D) according to claim 1, wherein, before entering the references from a terminal (T1), one proceeds to loading, at the level of a volatile memory (MV) and from a mass storage device said electronic terminal (B1, Bn) includes, a software for using the method as well as data (D) relating to offered and selectable services, said data (D) consisting solely of a visual and/or sound representation of specific data capable of being selected.

3. Method for transferring data (D) according to any of the preceding claims, wherein, after entering the references from a terminal (T1) and before selecting the specific data (D), one proceeds to analyzing the possibilities of the terminal (T1) according to the references entered in order to make available the specific data (D), compatible with the possibilities of the terminal (T1), and capable of being selected,

4. Method for transferring data (D) according to any of the preceding claim, wherein, before selecting the specific data (D), one proceeds to a visual and/or sound reproduction of the specific data capable of being selected, at the level of visual and/or sound reproduction means (PR) said electronic terminal (B1) includes.

5. Computer program including parts of program code and designed for carrying out the stages of the Method for transferring data (D) according to any of the preceding claims.

6. System for transferring data (D), of the type sounds and/or images and/or alphanumeric data and/or programs, between at least one interactive electronic public terminal (B1, Bn) and at least one mobile phone (T1, Tn) to be personalized, designed for implementing the method according to any of the claims 1 through 4, wherein said system includes:
a) at least one interactive electronic public terminal (B1, Bn), each terminal (B1, Bn) including:
- a central unit including storage means designed for containing, when the terminal is in operation, an operating software as well as data (D) relating to services offered;
- means for interacting with a user, of the type peripherals for selecting (PS) and for reproducing (PR) the data (D);
- means for interacting with an operator, of the type communication interface (MO) with an operating center (CE), via a communication network (R2);
- a mass storage device, containing the operating software and the data (D) that are transferred, upon each activation and/or upon each power-up of the terminal, to the storage means of the central unit;
b) means for transmitting said selected data to at least one selected mobile phone (T1), via a telecommunication network (R1);
c) at least one mobile phone (T1, Tn), each mobile phone (T1, Tn) including means for reproducing the received data (D),
wherein:
d) the data (D), which the mass storage device or the storage means include, consist solely of a visual and/or sound representation of the specific data capable of being selected;
e) the interactive electronic public terminal (B1, Bn) includes means for transmitting (MO) to the operating center (CE), via a communication network (R2), the designation of selected data;
f) the operating center (CE) includes means for transmitting, via a communication network (R1) and directly to said mobile phone (T1), the selected data based on the designation of the selected data received.

7. System according to claim 6, wherein the storage means of each terminal (B1, Bn) are defined, at least partially, by a volatile memory (MV), on the one hand, and when the terminal is in operation, that is designed for containing the operating software as well as, solely, a visual and/or sound representation of the specific data capable of being selected and, on the other hand, to which said operating software and the visual and/or sound representation of said data (D) are transferred, upon each activation and/or upon each power-up of the terminal.

8. System according to any of the claims 6 or 7, wherein the storage means of each terminal (B1, Bn) are defined, at least partially, by a non-volatile memory (MN) including a key for encrypting the identifiers of the subsets of the terminal and means for loading (ST) the operating software and the data, or for downloading (MO) said data from the operating center (CE), which is recalculated, upon each loading or downloading, and compared to the key stored in order to authorize or not its functioning.

9. System according to any of the claims 6 through 8, wherein each terminal (B1, Bn) includes means capable of sending, at regular intervals, an operating report toward the operating center (CE) as well as a statement on its functioning and/or an event log.

10. System according to any of the claims 6 through 9, wherein the peripherals for selecting (PS) and for reproducing (PR) the data (D) of each terminal (B1, Bn) are made based on a touch screen.

11. System according to any of the claims 6 through 9, wherein the peripheral for selecting (PS) the data (D) is a keyboard and the peripheral for reproducing (PR) them is a display screen.

12. System according to any of the claims 6 through 11, wherein each terminal (B1, Bn) includes a payment device, in particular in cash, by card, prepaid voucher or by any other payment means.

13. System according to any of the claims 6 through 12, wherein each terminal (B1, Bn) includes means designed for entering and sending telemessages.

14. System according to any of the claims 6 through 13, wherein each terminal (B1, Bn) includes means designed for entering and sending photographs.

15. System according to any of the claims 6 through 14, wherein the communication network (R1) is of the Hertzian type, in particular GSM, GPRS, UMTS, or of the switched type.

16. System according to any of the claims 6 through 14, wherein the communication network (R2) is of the Hertzian type, in particular GSM, GPRS, UMTS, or of the switched type.

17. System according to claims 15 and 16, wherein the communication networks (R1) and (R2) are confounded.

## Patentansprüche

1. Verfahren zur Übertragung von Daten (D) der Art Töne und/oder Bilder und/oder alphanumerische Daten und/oder Programme zwischen zumindest einem interaktiven öffentlichen elektronischen Terminalgerät (B1, Bn) und zumindest einem Funktelefon (T1, Tn), wobei dieses Verfahren darin besteht, dass:
a) im Bereich des benutzten interaktiven öffentlichen elektronischen Terminalgeräts (B1) die Bezugsdaten des zu personalisierenden Funktelefons (T1), insbesondere die vollständige Rufnummer und außerdem die Handelsmarke und das Modell übertragen werden;
b) im Bereich des besagten Terminalgeräts (B1) die spezifischen Daten (D) der Art Töne und/oder Bilder und/oder alphanumerische Daten und/oder Programme, insbesondere Logos, Klingeltöne, Spiele oder Anrufbeantwortermitteilungen, ausgewählt werden, und zwar mit dem Ziel, das Funktelefon (T1) zu personalisieren;
c) der für die ausgewählte Leistung fällige Betrag mit Hilfe eines am besagten Terminalgerät installierten Zahlungsperipheriegeräts (B 1) beglichen bzw. überwiesen wird;
d) dem Funktelefon (T1) über ein Kommunikationsnetz (R1) die ausgewählten Daten (D) übermittelt werden, mit dem Ziel, dieses Funktelefon (T1) zu personalisieren,
**dadurch gekennzeichnet, dass** das Verfahren darin besteht, dass:
e) die spezifischen Daten (D), die auf dem Terminalgerät (B1) aufbewahrt werden, nur durch eine visuelle und/oder Audiodarstellung der spezifischen auswählbaren Daten gebildet sind;
f) dem besagten Terminalgerät (B1) in einer Netzleitstelle (EG) zunächst nur eine Benennung der Daten, die mit dem Ziel ausgewählt wurden, um das Funktelefon (T1) zu personalisieren, übermittelt wird;
g) die ausgewählten Daten (D) von dieser Netzleitstelle (EG) über ein Kommunikationsnetz (R1) und direkt dem besagten Funktelefon (T1), und zwar auf der Grundlage der Benennung der ausgewählten Daten, die in diese Netzleitstelle (EG) eingegangen sind, übermittelt werden.

2. Verfahren zur Übertragung von Daten (D) nach Anspruch 1, **dadurch gekennzeichnet, dass**, bevor die Bezugsdaten eines Terminalgeräts (T1) übertragen werden, im Bereich eines volatilen bzw energieanhängigen i.e. flüchtigen Speichers (MV) und ab einem Massenspeicherperipheriegerät, welches das besagte elektronische Terminalgerät (B1, Bn) umfasst, eine Betreibersoftware zum Ausführen des Verfahrens sowie die Daten (D), die sich auf die angebotenen und auswählbaren Leistungen beziehen, geladen werden, wobei diese Daten (D) lediglich durch eine visuelle und/oder Audiodarstellung der spezifischen auswählbaren Daten gebildet seien.

3. Verfahren zur Übertragung von Daten (D) nach irgendeinem der vorgehenden Ansprüche, **dadurch gekennzeichnet, dass** nach der Übertragung der Bezugsdaten eines Terminalgeräts (T1) und bevor die spezifischen Daten (D) ausgewählt werden, eine Analyse des Leistungsvermögens des Terminalgeräts (T1) in Abhängigkeit von den übertragenen Bezugsdaten durchgeführt wird, um die spezifischen, mit dem Leistungsvermögen des Terminalgeräts (T1) kompatiblen und auswählbaren Daten (D) zur Verfügung zu stellen.

4. Verfahren zur Übertragung von Daten (D) nach irgendeinem der vorgehenden Ansprüche, **dadurch gekennzeichnet, dass**, bevor die spezifischen Daten (D) ausgewählt werden, eine visuelle und/oder Audiowiedergabe der spezifischen auswählbaren Daten, und zwar im Bereich der Mittel zur visuellen und/oder Audiowiedergabe (PR), die das besagte elektronische Terminalgerät (B1) umfasst, durchgerührt wird.

5. Computerprogramm, das Programmcodeabschnitte umfasst und für die Ausführung der Schritte des Verfahrens zur Übertragung von Daten (D) nach irgendeinem der vorgehenden Ansprüche vorgesehen ist.

6. System zur Übertragung von Daten (D) der Art Töne und/oder Bilder und/oder alphanumerische Daten und/oder Programme zwischen zumindest einem interaktiven öffentlichen elektronischen Terminalgerät (B1, Bn) und zumindest einem zu personalisierenden Funktelefon (T1, Tn), vorgesehen, um das Verfahren nach irgendeinem der Ansprüche 1 bis 4 anzuwenden, **dadurch gekennzeichnet, dass** dieses System Folgendes umfasst:
a) zumindest ein interaktives öffentliche elektronisches Terminalgerät (B1, Bn), wobei jedes Terminalgerät (B1, Bn) Folgendes umfasst:
- eine zentrale Einheit, umfassend Speichermittel, die vorgesehen sind, um, wenn das Terminalgerät getrieben wird, eine Betreibersoftware sowie die Daten (D), die sich auf die angebotenen Leistungen beziehen, zu steuern;
- Mittel für die Interaktion mit einem Benutzer der Art Peripheriegeräte zur Auswahl (PS) und zur Wiedergabe (PR) der Daten (D);
- Mittel für die Interaktion mit einem Betreiber der Art Kommunikationsschnittstelle bzw. Interface zur Kommunikation (MO) mit einer Netzleitstelle (EG) über ein Kommunikationsnetz (R2);
- ein Massenspeicherperipheriegerät, das die Betreibersoftware und die Daten (D) aufbewahrt, die bei jeder Aktivierung und/oder bei jedem Einschalten des Terminalgeräts den Speichermitteln der zentralen Einheit übermittelt werden;
b) Mittel für die Übermittlung der besagten ausgewählten Daten an zumindest ein ausgewähltes Funktelefon (T1), und zwar über ein Telekommunikationsnetz (R1);
c) zumindest ein Funktelefon (T1, Tn), wobei jedes Funktelefon (T1, Tn) Mittel für die Wiedergabe der empfangenen Daten (D) umfasst,
**dadurch gekennzeichnet, dass**:
d) die Daten (D), die das Massenspeicherperipheriegerät oder die Speichermittel aufbewahren, lediglich durch eine visuelle und/oder Audiodarstellung der spezifischen auswählbaren Daten gebildet sind;
e) das interaktive öffentliche elektronische Terminalgerät (B1, Bn) Mittel für die Übermittlung (MO) an die Netzleitstelle (EG) über ein Kommunikationsnetz (R2) einer Benennung der ausgewählten Daten umfasst;
f) die Netzleitstelle (EG) Mittel umfasst, um über ein Kommunikationsnetz (R1) und direkt an das besagte Funktelefon (T1) die ausgewählten Daten auf der Grundlage der Benennung der empfangenen ausgewählten Daten zu übermitteln.

7. System nach Anspruch 6, **dadurch gekennzeichnet, dass** die Speichermittel von jedem Terminalgerät (B1, Bn) zumindest teilweise durch einen flüchtigen Speicher (MV) gebildet sind, welcher, einerseits, wenn das Terminalgerät aktiviert ist, die Betreibersoftware sowie lediglich eine visuelle und/oder Audiodarstellung der spezifischen auswählbaren Daten aufbewahren soll, und, andererseits, an welchen diese Betreibersoftware und die visuelle und/oder Audiodarstellung dieser Daten (D), und zwar bei jeder Aktivierung und/oder bei jedem Einschalten des Terminalgeräts übermittelt werden.

8. System nach irgendeinem der Ansprüche 6 oder 7, **dadurch gekennzeichnet, dass** die Speichermittel von jedem Terminalgerät (B1, Bn) zumindest teilweise durch einen nicht flüchtigen Speicher (MN) gebildet sind, welcher einen Schlüssel für die Verschlüsselung der Einloggen-Identifikationen der Unterbaugruppen des Terminalgeräts und Mittel zum Laden (ST) der Betreibersoftware und der Daten oder zum Herunterladen (MO) der besagten Informationen von der Netzleitstelle (EG) umfassen, der bei jedem Laden oder Herunterladen neu berechnet und mit dem gespeicherten Schlüssel verglichen wird, um sein Funktionieren zu erlaubten oder nicht zu erlauben.

9. System nach irgendeinem der Ansprüche 6 bis 8, **dadurch gekennzeichnet, dass** jedes Terminalgerät (B1, Bn) Mittel umfasst, die angepasst sind, um in regelmäßigen Zeitabständen an die Netzleitstelle (EG) einen operativen Bericht sowie eine Statistik über ihr Funktionieren und/oder ein Ereignisprotokoll zu versenden.

10. System nach irgendeinem der Ansprüche 6 bis 9, **dadurch gekennzeichnet, dass** die Peripheriegeräte für die Auswahl (PS) und für die Wiedergabe (PR) der Daten (D) eines jeden Terminalgeräts (B1, Bn) durch einen Berührungsbildschirm verwirklicht sind.

11. System nach irgendeinem der Ansprüche 6 bis 9, **dadurch gekennzeichnet, dass** das Peripheriegerät für die Auswahl (PS) der Daten (D) eine Tastatur ist und das Peripheriegerät für die Wiedergabe (PR) von diesen ein Datensichtgerät bzw. ein Bildschirm ist.

12. System nach irgendeinem der Ansprüche 6 bis 11, **dadurch gekennzeichnet, dass** jedes Terminalgerät (B1, Bn) ein Peripheriegerät zum Zahlen insbesondere in bar, durch eine Zahlkarte, durch einen Prepaid-Gutschein oder durch jedes weitere Zahlungsmittel umfasst.

13. System nach irgendeinem der Ansprüche 6 bis 12, **dadurch gekennzeichnet, dass** jedes Terminalgerät (B1, Bn) Mittel umfasst, die angepasst sind, um SMS zu übertragen und zu versenden.

14. System nach irgendeinem der Ansprüche 6 bis 13, **dadurch gekennzeichnet, dass** jedes Terminalgerät (B1, Bn) Mittel umfasst, die angepasst sind, um Bilder zu übertragen und zu versenden.

15. System nach irgendeinem der Ansprüche 6 bis 14, **dadurch gekennzeichnet, dass** das Kommunikationsnetz (R1) vom Typ Richtfunknetzwerk, insbesondere GSM, GPRS, UMTS oder vermitteltes Netzwerk ist.

16. System nach irgendeinem der Ansprüche 6 bis 14, **dadurch gekennzeichnet, dass** das Kommunikationsnetz (R2) vom Typ Richtfunknetzwerk, insbesondere GSM, GPRS, UMTS oder vermitteltes Netzwerk ist.

17. System nach Ansprüchen 15 und 16, **dadurch gekennzeichnet, dass** die Kommunikationsnetze (R1) und (R2) fusioniert sind bzw. miteinander übereinstimmen.
